(19) Europäisches Patentamt
European Patent Office
Office européen des brevets

(11) **EP 2 101 168 A1**

(12) **EUROPEAN PATENT APPLICATION**

(43) Date of publication:
**16.09.2009  Bulletin 2009/38**

(51) Int Cl.:
***G01N 21/63*** (2006.01)    ***G01N 21/55*** (2006.01)

(21) Application number: **08305052.6**

(22) Date of filing: **12.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
- **ECOLE NORMALE SUPERIEURE DE LYON**
  **69007 Lyon Cédex 07 (FR)**
- **CENTRE NATIONAL DE**
  **LA RECHERCHE SCIENTIFIQUE (CNRS)**
  **75794 Paris (FR)**
- **East China Normal University**
  **Shanghai 200062 (CN)**

(72) Inventors:
- **Argoul, Françoise**
  **69006, Lyon (FR)**

- **Berguiga, Lofti**
  **69007, Lyon (FR)**
- **Zeng, Heping**
  **Key State Laboratory of Optical and Magnetic Resonance Spectroscopy**
  **East China Normal University**
  **200062, Shanghai (CN)**
- **Zhang, Sanjun**
  **Ecole Normale Supérieure de Cachan**
  **Laboratoire de Photonique Quantique et Moléculaire**
  **94235 Cachan Cedex (FR)**

(74) Representative: **Blanchard, Eugène Gilles et al**
**Cabinet Beau de Loménie**
**51, avenue Jean Jaurès**
**B.P. 7073**
**69301 LYON (FR)**

(54) **Surface plasmon resonance enhanced nonlinear microscopy**

(57)    The present invention relates to a nonlinear microscopy method for imaging a sample (S) by means of harmonic generation, characterized in that the electromagnetic field E of the excitation light beam (L) illuminating the sample is amplified by surface plasmon resonance (SPR) at the interface between said sample (S) and a metal layer (5) onto which the sample is lying and said excitation light beam to amplify the intensity of harmonic light beams (2L) in an observation beam reflected or transmitted from the sample. The invention also proposes a microscope to carry out the method of the invention.

FIG.13

**Description**

The present invention relates to the field of nonlinear microscopy, and particularly to adaptations and improvements of nonlinear imaging techniques to increase their sensibility, resolution and performance and to offer original applications to anisotropic media imaging.

To achieve this goal, the present invention proposes to combine a nonlinear microscope to a surface plasmon resonance (SPR) microscope.

More specifically, the present invention proposes the use of the surface plasmon resonance (SPR) to enhance the nonlinear electromagnetic excitation traditionally used in nonlinear microscopy processes and to confine the electromagnetic field (in the three directions of space.

The present invention also demonstrates that SPR enhancement can be used to discriminate directional and anisotropic responses of molecules or samples deposited on surfaces. The implementation of surface plasmon resonance in nonlinear optical microscopy therefore provides a new method of characterisation of sample that standard nonlinear microscopy cannot afford to.

Microscopic imaging has been widely used for several decades in a large variety of applications, amongst which biology and chemistry have probably been the most interested and requiring fields. Different imaging technologies have been developed and implemented to carry out microscopic imaging, from the simplest optical constructions to image samples at ambient light to the most complex systems including specific light sources, optical processing and detection means like for instance in Scanning Electron Microscopy, also known as S.E.M. technology.

Most of these microscopic imaging technologies rely on linear optical processes, i.e. processes based on the linear response of materials. Even if the possibility of generating optical harmonics has been by Franken et al. [PRL 7,4 (1961) p. 118-119], recent and constant improvements in the field of light sources, and particularly of laser sources, the power of which has considerably been amplified, together with improvements in the understanding of optical processes and material optical responses as well as improvements in the field of electronic detection and signal processing have opened the path to the development of new microscopic imaging technologies.

One of these new microscopic imaging technologies is harmonic generation microscopy, which relies on the nonlinear optical response of samples submitted to a high-power laser beam, which is directed towards the samples through specific optical components capable of resisting the intense instant power of a pulsed laser beam. The most commonly known harmonic generation microscopy methods these days are second harmonic generation microscopy (SHG) and third harmonic generation microscopy (THG). By symmetry, these nonlinear processes are forbidden in media with an inversion centre (frequently encountered in volume materials) but they are allowed on surfaces or interfaces. This surface-specific nature makes the nonlinear optical processes most appropriate for probing molecules adsorbed at an interface between two centro-symmetric media.

The main advantages of surface harmonic generation microscopy are:

(i) a resolution improvement,
(ii) an access to non destructive wavelength for biological applications, and
(iii) useful surface analytical probes of the orientation of adsorbed molecules.

(i) Nonlinear microscopy helps first improving the lateral resolution on the imaging surface, i.e. the resolution in a direction horizontal to the imaging surface, which by convention will be referred to as the x-direction. Indeed, the spot size of the electromagnetic light beams illuminating a sample on an imaging surface determines the lateral resolution of microscopy processes in linear excitation mode. In nonlinear excitation mode, the spot size does not determine the lateral resolution, since the excitation is made by a non linear power (n=2,3,...) of the electric field. This nonlinear field distribution is generally sharper and finer than the original field distribution, which improves the lateral resolution of nonlinear microscopy. For example, in SHG, the resolution is improved by a factor $\sqrt{2}$. Furthermore, since the resolution of microscopes depends on the wavelength of collected light used to form the images, shorter wavelengths are preferred for a better resolution. This requirement is more easily satisfied in harmonic generation microscopy, since the wavelength of the harmonic light is a fraction of the fundamental light ($\lambda$ /n ).

(ii) The shorter wavelengths being more destructive (electronic transitions from internal orbitals), harmonic generation microscopy is therefore likely to be less damaging chemical or biological samples, since the fundamental light can be chosen in the visible or near infra red range for a nonlinear excitation in the UV frequency range.

(iii) Finally, the nonlinear response of molecules of the observed sample, illuminated by a high power pulsed excitation laser light beam, with an electric field **E(r)** is given by its polarization **P** which should be expressed as a power series of applied electric field:

$$\mathbf{P(r)} = \varepsilon_0 \ [\ \chi^{(1)}\ \mathbf{E(r)} + \ \chi^{(2)}\ \mathbf{E(r)}\ \mathbf{E(r)} + \chi^{(3)}\ \mathbf{E(r)}\ \mathbf{E(r)}\ \mathbf{E(r)}\ + ......]$$

Where $\varepsilon_0$ is the free space permittivity and $\chi^{(i)}$ is the $i^{th}$ order susceptibility tensor of the medium.

$\chi^{(1)}$ is the linear susceptibility, it is a first order tensor with nine elements in three dimensional space.

$\chi^{(2)}$ is the second order susceptibility, it is a second order tensor with 27 elements which can be described by three indices corresponding to the three spatial directions $\chi_{ijk}^{(2)}$(i,j,k=x,y,z).

$\chi^{(3)}$ is the third order susceptibility, it is a third order tensor with 81 elements. These susceptibilities are macroscopic quantities averaged over a large set of molecules. Their computation from the molecular polarizabilities is built from a statistical modelling of molecular orientations.

The nonlinear interaction with the exciting electromagnetic field and the emitted light for each frequency is ruled by the following equation :

$$\nabla \times \nabla \times \mathbf{E}(\mathbf{r}, \omega) - \frac{\omega^2}{c^2} \mathbf{E}(\mathbf{r}, \omega) = \mu_0 \omega^2 \mathbf{P}(\mathbf{r}, \omega)$$

From this equation, one may conclude that each frequency component of light (fundamental and harmonics) propagates with its own velocity, independently of the other ones. The nonlinear character of the excitation light appears in the polarizability term. As far as the material bears some anisotropy, its response in polarisation will also be anisotropic. The advantage of nonlinear optics is that due to the shortness of the excitation time (pico to femto seconds) the molecular elements from which the medium is made may not have enough time to randomize their orientation and therefore a molecular anisotropy will be more easily revealed.

However, harmonic generation microscopy also has some drawbacks or limits. One of these is the potential alteration or damaging of the samples that may occur because of the high power of the excitation light sources that are required for nonlinear microscopy. It is therefore very important that special consideration be taken to avoid damaging the samples, as far as liquid or biological samples are concerned.

Solving the inverse problem, i.e. recovering the molecular orientations from the susceptibility coefficients is very difficult unless drastic assumptions are made, in particular a macroscopic symmetry of the sample on the surface (for instance rotational symmetry in the surface plane), the absence of interaction of adsorbed molecules with the surface, and a mono-axial or rod-like assumption for their molecular hyperpolarizability tensor.

Practically, this amounts to make several SHG measurements with different polarizations (s and p) of the exciting light and the collected light, in order to access to $\chi_{ijk}$ factors in the three directions i, j, k. With respect to this measurements, Ex, Ey and Ez should be accessible (non vanishing).

The polarization of the exciting light becomes an even more acute problem in the case of nonlinear microscopy, since the Ez component of the electromagnetic field near focus is negligible. To recover information in the z direction, high numerical aperture lenses are needed. For example, with a high NA lens in air, the different components of the electromagnetic field $\mathbf{E}$ behave in proportion to (Ex, Ey, Ez)~(1, 0.2, 0.35). It is therefore difficult to access all the components $\chi_{ijk}^{(2)}$ (i,j,k=x,y,z) of nonlinear susceptibilities with these constraints on the electric field.

The use of harmonic surface waves, i.e. nonlinear response of a sample to excitation has been discussed in WO 01/92858 A1 and in the article of C. Qian, T.S. Velinov, M.C. Pitter, and M.G. Somekh, Surface plasmon-assisted widefield nonlinear imaging of gold structures, Journal of microscopy, 229, (2008) 6-11.

However, none of these documents discloses the coupling between SPR and harmonic generation microscopy to obtain information on samples and their susceptibilities in selected directions.

Coupling nonlinear microscopy with SPR as proposed by the present invention modifies the electromagnetic field distribution near focus by enhancing the z component of the electromagnetic field $\mathbf{E}$, actually the new proportions for $\mathbf{E}$ are: (Ex, Ey, Ez)~(1, 0.08, 0.6) when the linear polarization is parallel to x. The fact that SPR can only be excited in p polarization of the incoming light, allows the separation of the two directions x and y. The cancellation of the field in the y direction (in the case of linear polarization in x direction), simplifies the pool of measurements by decoupling the x and y directions. This is obtained by a simple 90° rotation of the linear polarizing system.

The SPR coupling increases the ratios Ez/Ex, and working with nonlinear excitation raises these ratios to higher power, for instance a power two for SHG and SFG $(Ez/Ex)^2$ is then scaled by a factor of 3 from $0.35^2$ to $0.6^2$. Moreover, SPR enhances the total field by about one order of magnitude, this enhancement reaches two orders of magnitude for the square of the field.

An object of the present invention is to provide a harmonic generation microscopy method and imaging system that significantly improve the resolution of such microscopy against the prior art and helps recovering the molecular orientations in samples from their susceptibilities in the three directions of space.

To achieve this goal the present invention provides a nonlinear microscopy method for imaging a sample by means of harmonic generation (HG) according to claim 1.

The nonlinear microscopy method of the invention advantageously combines surface plasmon resonance (SPR) with second harmonic generation (SHG) to provide high-resolution microscopy. The surface plasmon resonance effect amplifies the electromagnetic field E of the excitation light beam at the interface between the sample to be imaged and the sample supporting plate, which is coated with a metallic layer to allow SPR to take place. It results in the excitation light beam having comparable $E_z$ and $E_x$ amplitude.

In the method of the invention, the coupling of the excitation light beam onto the sample can be achieved through either a prism (low resolution mode) or an high NA objective lens (high resolution mode). The advantage of using an high NA objective lens is that it affords a resolution better than 1/10 of fundamental wavelength in water medium to launch the plasmon excitation.

In addition, the ratio of $E_z/E_x$ can be adjusted by controlling the ratio of excitation light that can and cannot excite surface plasmon.

Considering that a linear polarization is given to the excitation light, the method of the invention enables access to the three $E_x$, $E_y$ and $E_z$ related components of nonlinear susceptibility tensors $\chi_{ijk}^{(2)}$ of a sample. Therefore, the SPR-enhanced nonlinear microscopy method of the invention allows all the 3-directions related nonlinear susceptibility tensor components of an examined sample be accessed and separated.

According to a first preferred characteristic of the method of the invention, the sample supporting plate comprises a transparent optical plate beam being coated onto one surface with a metallic layer having a thickness of a few tens of nanometers and in that said excitation light beam is projected onto said sample and said metallic layer through optical coupling means comprising an objective having a high numerical aperture and an immersion oil having the same reflective index as the optical plate to induce surface plasmon resonance at the interface between said sample and said metallic layer.

The pulsed coherent light beam used in the method of the invention is also preferably generated by a femtosecond laser source.

Preferably, the thickness of said metallic layer lies in the range of 30 to 70 nanometers and the numerical aperture of the objective of the optical coupling means is chosen to be higher than 1.05.

Still preferably, the method of the invention also comprises a two-dimensional scanning step of the sample by moving said sample supporting plate into a horizontal plane to perform a point-by-point scanning of the sample with said excitation light beam.

According to the method of the invention, it is also preferred that polarizing step is carried out by polarising means positioned in the optical path of said excitation light beam. Said polarizing means not only allow p-polarization of said excitation light beam but also help choosing either x-axis or y-axis, i.e. directions parallel to the sample supporting plate, for recovering the nonlinear susceptibility response of the said sample in different molecular orientations.

According to the method of the invention, said pulsed coherent light beam is preferably generated by either a nanosecond, a picosecond or a femtosecond laser source.

The method of the invention also includes several specific experimental protocols and ways of carrying out said method. In a first said specific protocol, two excitation light beams having a different frequency are generated, polarized and projected onto said sample positioned onto said sample supporting plate to realize sum or difference frequency generation.

In a further specific experimental protocol of the method of the invention, the nonlinear transmitted light is collected and detected to compare with the nonlinear back reflected light in the observation beam.

Finally, in a last specific experimental protocol of the method of the invention, the excitation light beam is divided is two beams of same frequency, which are respectively polarized and directed towards the sample and a frequency doubling element, the back reflected linear and nonlinear light beams from the sample respectively interfering with the linear and nonlinear light beams from the output of the frequency doubling element, the resulting interfering light beams being collected and detected independently.

The present invention also provides an imaging system specifically according to claim 11, which is designed to carry out the nonlinear microscopy method previously presented.

According to the present invention, it is characterized in that said sample supporting plate comprises a transparent optical plate being coated onto one surface with a metallic layer and in that it further comprises optical coupling means for projecting said excitation light beam onto said sample and said metallic layer of said optical plate and inducing surface plasmon resonance at the interface between said sample onto said sample supporting plate and said light beam.

The present invention will be apparent to those skilled in the art in view of the following description of preferred embodiments of the imaging system of the present invention, which can be used to implement the method of the invention and in reference to the following drawings in which:

- **figures 1A an 1B** represent respectively the general principles of surface plasmon excitation in low and high-resolution nonlinear microscopy according to the invention,
- **figure 2** represents a low-resolution SPR-enhanced nonlinear microscope according to the present invention;

- **figure 3A** represents a high-resolution SPR-enhanced nonlinear microscope according to the invention allowing collection of the back reflected nonlinear response only;
- **figure 3B** represents a high-resolution SPR-enhanced nonlinear microscope according to the invention allowing collection of the back reflected nonlinear and fundamental responses;
- **figure 4A** represents a high-resolution SPR-enhanced nonlinear microscope according to the invention allowing collection of the back reflected and transmitted nonlinear optical responses;
- **figure 4B** represents a high-resolution SPR-enhanced nonlinear microscope according to the invention allowing collection of the back reflected and transmitted nonlinear optical responses and of the back reflected fundamental response;
- **figure 5** represents a high-resolution SPR-enhanced sum frequency generation microscope according to the invention;
- **figure 6** represents a first variant **Block 0a** of a first functional module of the microscope according to the invention, dedicated to the generation and conditioning of an excitation light beam;
- **figure 7** represents a second variant **Block 0b** of a first functional module of the microscope according to the invention dedicated to the generation and conditioning of an excitation light beam;
- **figure 8** represents an optional complementary part **Block 0c** for the first module shown in **figure 6** or **7** for a high-resolution SPR-enhanced sum frequency generation microscope according to the invention as depicted in **figure 5**;
- **figure 9** represents a first variant **Block 1a** of a second functional module **Block 1** of a microscope according to the invention comprising means of nonlinear excitation and collection for low-resolution microscopy;
- **figure 10** represents a second variant **Block 1b** of a second functional module **Block 1** of a microscope according to the invention comprising means of nonlinear excitation and collection for high-resolution microscopy;
- **figure 11** represents the structure of an optional functional module **Block 2** of a microscope according to the invention as represented in **figures 4A** and **4B,** said **Block 2** comprising means for collecting and detecting the transmitted nonlinear light from a sample
- **figure 12** represents the structure of an optional functional module **Block 3** of a microscope according to the invention as represented in **figures 3B** and **4B,** said **Block 3** comprising means of linear light collection in high-resolution microscopy configurations;
- **figure 13** represents the structure of an interferometric configuration of a SPR-enhanced nonlinear microscope according to the invention.

The present invention relates to nonlinear microscopy and particularly to a method for imaging a sample by means of second harmonic generation (SHG) light beams reflected and/or transmitted by said sample, i.e. light beams emitted by non-centro-symmetric materials excited under an excitation light beam having a determined wavelength $\lambda$, like a laser beam.

The SHG light beams have half the wavelength (twice the frequency) $\lambda/2$ of the excitation light beam and are strongly related to the surface properties of materials. They can therefore help characterizing said surface properties of materials.

The invention proposes a new SHG microscopy method into which SHG light intensity is amplified by surface plasmon resonance (SPR), thereby considerably improving the resolution and sensibility of the microscopy.

Surface plasmon (SP) is an evanescent electromagnetic wave, which locates at the interface between a metallic layer and a dielectric environment, like air or a liquid for instance, when an excitation high-power light beam impinges the metallic layer. Surface plasmon (SP) has the same frequency as the excitation light and it amplifies the electromagnetic field $\vec{E}$ of said light near the interface between said metallic layer and the dielectric medium.

It is therefore appropriate for imaging samples by SPR microscopy, as well as for increasing the resolution and sensibility of SHG microscopy by combining both SPR and SHG microscopy techniques, what the present invention proposes in details hereinafter.

SPR can only occur if specific conditions are met between the exciting light beam and the metallic layer. For instance, only p-polarized incident light (oscillation direction of the incident electric field is parallel to the plane of incidence) light can excite SP, at an appropriate incident angle $\theta_p$, known as the surface plasmon resonance angle. Meanwhile, s-polarized light (oscillation direction of the incident electric field is perpendicular to the plane of incidence) cannot excite SP.

Surface plasmon resonance occurs at the interface between a thin metal layer, which in most applications is a gold or silver layer, and a medium of observation, which preferably is air or an aqueous medium.

For surface plasmon enhanced nonlinear optical microscopy according to the present invention, the metal layer is preferably coated on a microscope coverslip having a 30 to 70 nm thickness.

When a sample of observation is deposited onto said metal layer and the metal layer and sample illuminated with a light beam crossing a coupling medium and impinging the metal layer-observation medium interface with a given angle $\theta_p$, known as the angle of surface plasmon resonance (SPR), the SP is excited and the sample can be imaged and observed. Several experimental configurations can lead to generation and observation of SPR.

Moreover, the wave vector $k_{sp}$ of SP is larger than the wave vector k in air of the excitation light, with the same frequency, so it cannot be excited directly by said light. The wave vector k of excitation light needs therefore be increased by optical means to become at least equal to the wave vector $k_{sp}$. The common methods are use of grating, or prism of glass, or of other materials to meet the requirement of wave vector.

The generation of optical second harmonic signals depending on the 2nd order susceptibility of the material and the fundamental electromagnetic field E, combining SPR with SHG microscopy enhances the electromagnetic field near a sample to observe, and will benefit the SHG at the surface. This new technique combines the advantage of sensitivity to surface properties of both technologies, thus imaging systems based on this new technique have high sensitivity and resolution.

The present invention thus proposes a new nonlinear microscopy method for imaging a sample **S** by means of harmonic generation amplified by surface plasmon resonance as defined in the claims.

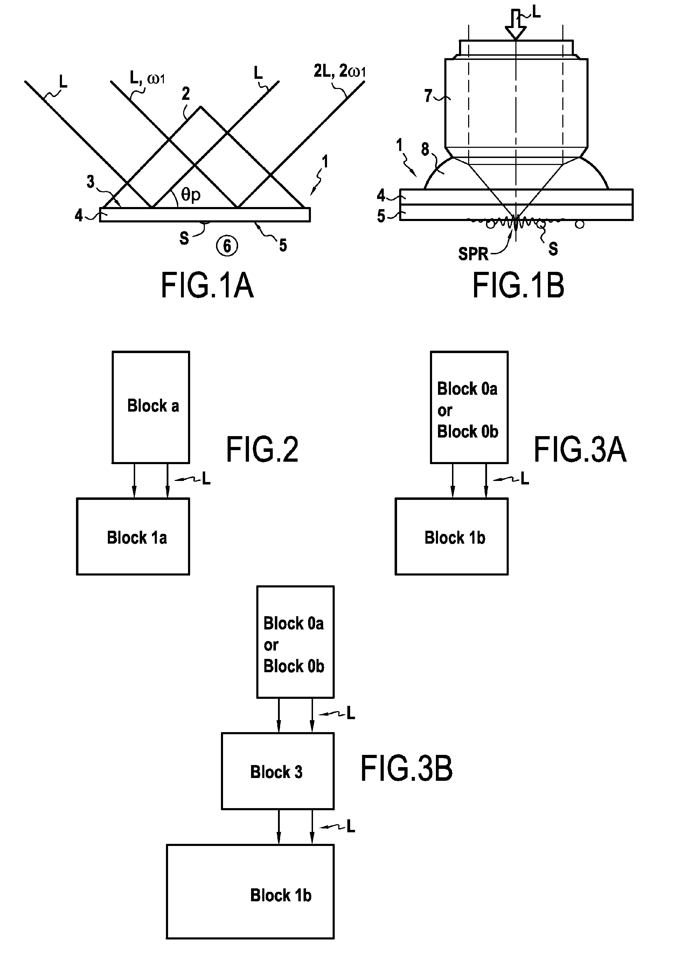

**Figures 1A** and **1B** represent the general principle of surface plasmon excitation in low and high-resolution nonlinear microscopy as it can be carried out according to the method of the present invention. In the rest of the description, corresponding structural elements will be given the same reference number in each of the embodiments disclosed.

**Figure 1A** shows the basic experimental configuration for low resolution nonlinear microscopy. It first comprises a coupling medium **1** comprising a prism **2**, a matching index oil **3**, and a coverslip **4**. Preferably, the matching index oil **3** is chosen so as to keep the optical continuity between the prism **2** and the coverslip **4** forming a sample supporting plate. A metal layer **5**, of gold or silver preferably, is deposited on the back face of the coverslip **4**, in contact with a sample of observation **S** and an observation medium **6**. An excitation light beam **L** of frequency $\omega_1$, for instance generated by a pulsed laser source (not shown), illuminates the prism **2** in total internal reflection mode, and the angle of incidence of the light **L** onto the prism **2** is fixed to launch surface plasmon resonance at the metal layer **5** - observation medium **6** interface.

Once SPR occurs, the reflected light **L**, as shown on **figure 1A,** can be collimated and analysed to image the sample **S**. The reflected light forms an observation light, which comprises the reflected fundamental light **L** and the nonlinear harmonic light beam **2L,** which has twice the frequency of the fundamental light **L** and it can be detected and analysed by a photodetector coupled to computer means to built an image of the sample **S**. If only the harmonic light beams are used to establish the image of the sample, they must be isolated from the fundamental light in the observation beam by dedicated means like a beam separator.

**Figure 1B** shows the basic experimental configuration for high-resolution nonlinear microscopy. In that configuration the excitation of surface plasmon is achieved by means of an objective **7** having a high numerical aperture (NA). An excitation light beam L of frequency $\omega_1$, which is preferably generated by a pulsed laser source, is focused through objective **7** and an immersion oil **8** on a metal layer **5** coated on the back face of a coverslip **4,** which is in contact on its front face with the immersion oil **8**, which is thereby inserted between objective **7** and coverslip **4** forming a sample supporting plate. A sample of observation **S** to be imaged lies on the metal layer **5** in a medium of observation **6** contacting said metal layer. In that case, the coupling media allowing surface plasmon resonance comprises the high numerical aperture objective **7**, the immersion oil **8**, and the coverslip **4**.

Once SPR occurs on the metal layer **5** under excitation of light beam **L** focused by objective **7**, the reflected light (not shown in **figure 1B),** which forms an observation light beam, is collimated by the objective **7** and can then be oriented to collection and analysing means like a photodetector coupled to computer means to build an image of the sample **S**. The reflected light comprises the reflected fundamental light L and the nonlinear harmonic light beam. If only the harmonic light beam is used to establish the image of the sample, it must be isolated from the fundamental light in the reflected light by dedicated means like a optical separator.

The use of an objective **7** to generate surface plasmon resonance as shown in **figure 1B** gives a higher resolution than the use of a prism as shown in **figure 1A.** Moreover, the contrast of the images obtained by high resolution SPR microscopy as shown in **figure 1B** can also be improved by profiling the incident light beam **L** at the entrance of the objective **7** with an annular diaphragm with a transparent window centred at the diameter corresponding to the surface plasmon angle $\theta_p$, or by defocusing the objective **7,** i.e. by moving the focus beyond the metal layer **5** interface inside the medium of observation.

Now that the general principles of surface plasmon resonance nonlinear microscopy have been presented, the present invention will be hereinafter presented in details with reference to **figures 2** to **13**, which show preferred embodiments of SPR-enhanced nonlinear microscopes according to the present invention.

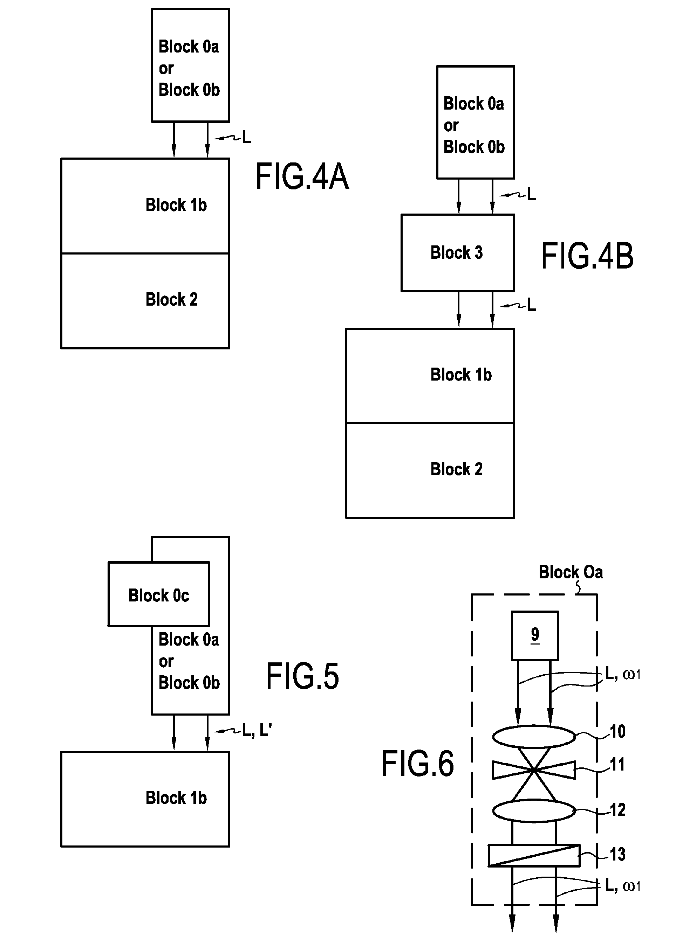

**Figures 2** to **5** depict variants of a SPR-enhanced nonlinear microscope according to the present invention in a schematic functional modular form. The precise structures and compositions of the different functional modules of the microscope are further represented in **figures 6** to **12**.

Whichever variant of the microscope of the invention is concerned, it comprises two main functional modules, referred to as Blocks hereinafter:

- a first module is dedicated to the generation and conditioning of an excitation light beam, and referred to in the figures as **Block 0,** with variants **Block 0a** to **Block 0c,** and
- a second module is dedicated to the combined generation of nonlinear light beams and surface plasmon resonance (SPR) on a metal layer **5** supporting a sample of observation **S** to be imaged and the collection of the nonlinear optical light generated, and referred to in the figures as **Block 1**, with variants **Block 1a** for low resolution SPR enhanced nonlinear optical microscopy and **Block 1b** for high resolution SPR enhanced nonlinear optical microscopy.

Moreover, more developed configurations of the microscope of the invention can be set up by addition of at least one third module dedicated to complementary modes of light collection to form images from a sample of observation **S**. These complementary modes comprise the collection of the nonlinear transmitted light referred hence to a first optional module referred to as **Block 2** in the drawings and the collection of the linear reflected light hence to a second optional module referred to as **Block 3** in the drawings.

Each embodiment of the microscope of the invention works the same way. The first module **Block 0** conditions a light source(s) to direct an excitation light beam **L** towards the second module **Block 1**, where the nonlinear effect enhanced by surface plasmon resonance occurs to image a sample **S**. The back reflected light resulting from nonlinear effect is then collected and imaged from the sample object **S**.

The different modules **Block 0, Block 1, Block 2** and **Block 3** of the microscope according to the present invention in their different embodiments will now be presented in details.

**Figures 6** to **8** represent variants of the first module Block 0 of the microscope of the invention, referred as **Block 0a, Block 0b** and **Block 0c** respectively.

**Block 0a** comprises a first pulsed laser source **9** producing an excitation light beam **L** of frequency $\omega_1$. Said light beam **L** is expanded through a lens **10,** spatially filtered with spatial filter **11** and collimated with a second lens **12**. The expanded and collimated beam **L** is then polarised by a polarising system **13,** which is a set of a polariser and half wavelength plate. The role of polarising system **13** is to polarise the light as well as to control and to change the orientation of the polarisation. The excitation light beam $\omega_1$ at the output of the polarising system **13** forms the output of **Block 0a.**

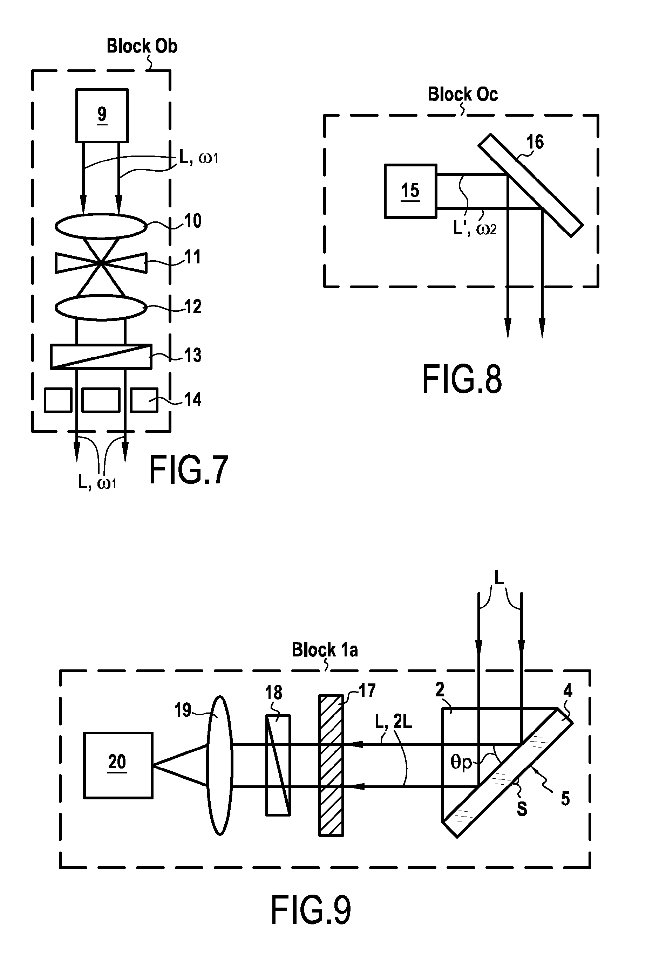

A variant of **Block 0a** is **Block 0b,** represented in **figure 7**. In that configuration, the output of the polarising system **13** the beam **L** goes through an annular diaphragm **14,** which has a diameter fitted to stop all the part of the beam **L** that does not allow surface plasmon excitation. The resulting beam **L** is an annular beam.

In some specific applications of the microscope of the invention like for example for sum frequency generation as shown in **figure 5**, **Block 0a** or **Block 0b** must be associated with **Block 0c** represented in **figure 8**, in order to add a second excitation light source **15** with a distinct frequency $\omega_2$ from the first pulsed source **9**.

In **Block 0c,** the second light beam **L'** of a second pulsed laser **15**, is directed with a dichroïc mirror **16**. When the **Block 0c** is added to **Block 0a** or **0b,** the dichroïc mirror **16** is placed between the first pulsed laser source **9** and lens **10** in such a way that the beam from the pulsed laser source **15** is superimposed to the beam **L** from the first light source **9**. In such a configuration, the beam **L'** will be expanded, filtered, collimated, polarised and optionally profiled by the same way as the light beam **L** through respectively lens **10,** spatial filter **11**, lens **12,** and polarising means **13**, as well as optional annular diaphragm **14** if **Block 0b** is associated to **Block 0c.**

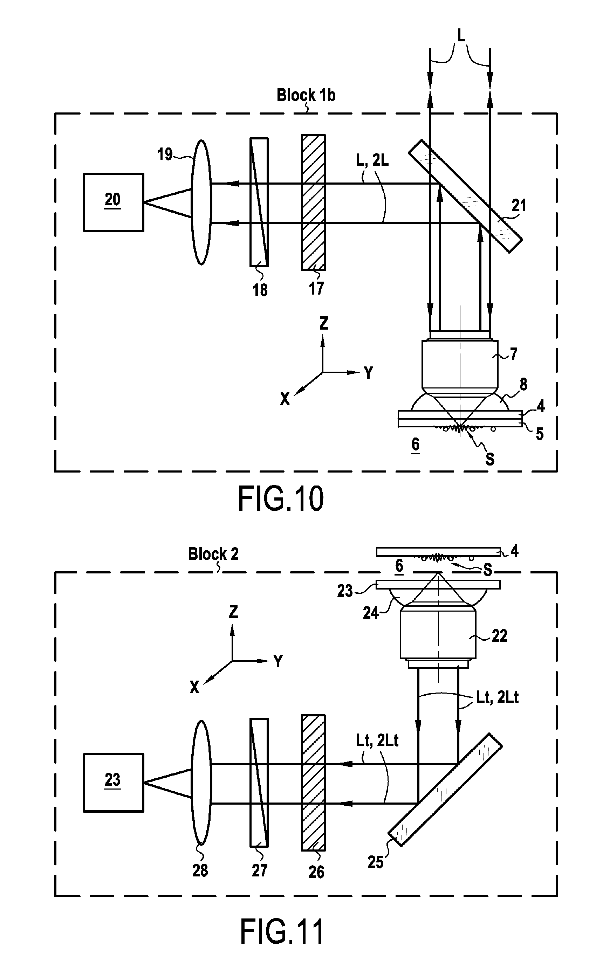

Following the light conditioning means of **Block 0**, the SPR-enhanced nonlinear microscope of the invention comprises means of nonlinear excitation and collection forming the second module of the microscope and referred to as **Block 1**, two embodiments of which are represented in **figures 9 and 10**.

**Figure 9** represents **Block 1a,** which comprises means of nonlinear excitation and collection for low-resolution microscopy as presented and described in **figure 1A.**

At the output from **Block 0**, the output light **L** is directed towards a prism **2** with an angle that corresponds to the angle of surface plasmon resonance $\theta_p$. The light **L** is coupled as previously explained in **figure 1a.** On the metal layer **5** surface the electromagnetic field **E** is enhanced by surface plasmon resonance (SPR) increasing the nonlinear optical response of the molecules of the sample object **S** lying on the metal layer.

The nonlinear emitted lights (for instance harmonics of the exciting light or sum of frequencies $\omega_1$ and $\omega_2$) occur at the same angle as the reflected fundamental light **L** i.e. $\theta_p$. The reflected light forms an observation beam that is filtered to eliminate the light of the fundamental frequency $\omega_1$ with a filter set-up **17**, analysed with a polariser **18** and directed with a conjugating lens **19** to a photodetector **20**. Photodetector **20** can be indistinctly a photodiode, a photomultiplier tube, a photo-counting detector or a CCD camera.

**Figure 10** represents **Block 1b,** which comprises means of nonlinear excitation and collection for high-resolution microscopy as presented and described in **figure 1B.**

At the output from **Block 0**, the output light **L** is directed towards a high numerical aperture lens objective **7**. The numerical aperture of the objective must be chosen higher than 1.05 when the observation medium **6** contacting the metal layer **5** is air and higher than 1.55 when the observation medium **6** is an aqueous solution when the metal layer 5 is gold. The light **L** is coupled as previously explained in **figure 1B.**

At metal layer **5**-observation medium **6** interface, the electromagnetic field **E** is enhanced by the surface plasmon resonance increasing the nonlinear optical response of the molecules of the sample object **S**. The nonlinear emitted light beam **2L** are reflected at the same angle as the reflected fundamental light **L**, i.e. $\theta_{\mathbf{p}}$. The reflected fundamental light **L** and the nonlinear light beams **2L** form an observation beam, which passes back through the objective **7** after reflection onto the metal layer **5**.

This back reflected light arrives on a dichroic mirror **21**, which transmits the fundamental light **L** and reflects the nonlinear harmonics **2L**. The nonlinear light beam **2L** is filtered with a filtering set-up **17** to eliminate the residual light of fundamental light that has not been transmitted by dichroic mirror **21**. It is then further analysed with a polariser **18** and directed with a conjugating lens **19** to a photomultiplier **20**, which can be indistinctly a photodiode, a photomultiplicator tube, a photo counting detector or a CCD camera.

The nonlinear microscope according to the invention comprises in its simplest embodiment at least one **Block 0** and at least one **Block 1** as represented schematically in **figures 2, 3A and 5**.

In another embodiment of the nonlinear microscope of the invention, it comprises means for collecting and detecting the transmitted nonlinear light from a sample object observed. These means form **Block 2** represented in **figures 4A** and **4B** and in detail in **figure 11.**

In such embodiment, the evanescent nonlinear transmitted light **2Lt** is collected with a second lens objective **22**, which is placed at the side of the medium of observation **6** into which the sample **S** is placed and observed with the microscope. A coverslip **23**, an immersion oil **24** and high numerical aperture objective **22** collects nonlinear transmitted light **2Lt** at very large span of angle and redirect it to the back focal plane of objective **22**. The nonlinear transmitted light **2Lt** is, as in **Block 1b,** reflected by a dichroic mirror **25,** which transmits the fundamental light **Lt** and reflects the nonlinear harmonics **2Lt** which is directed to a filter setup **26** to eliminate the residual fundamental light **Lt**, and finally analysed by a polariser **27**.

The nonlinear transmitted light **2Lt** is then focused by a lens **28** to a photodetector **29**, which is connected to computer means for analysing said nonlinear transmitted light.

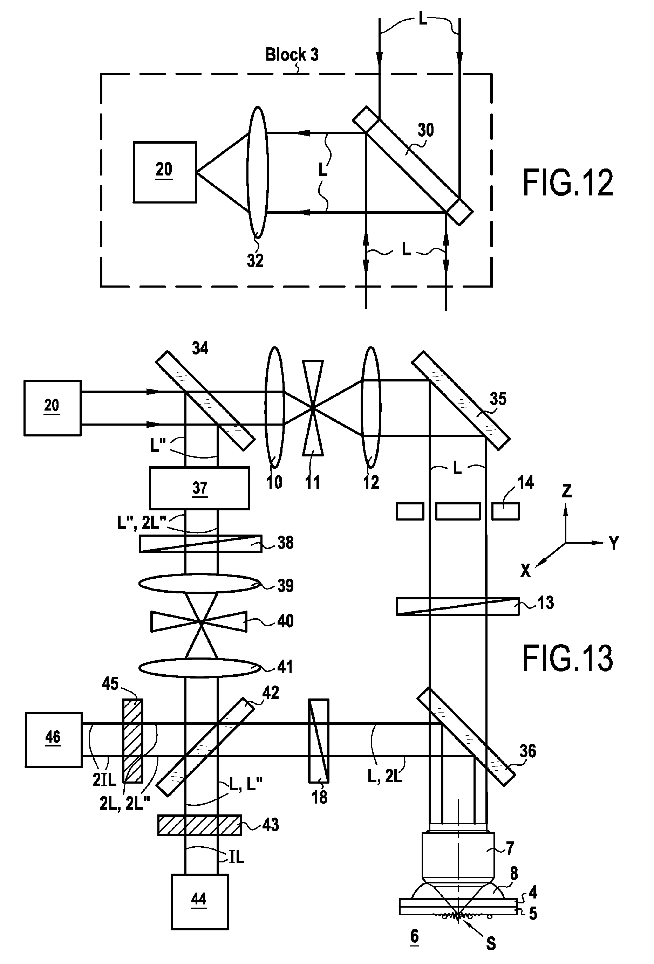

In still another embodiment of the microscope of the invention represented in **figures 3B and 4B,** it further comprises a block of linear light collection in high-resolution microscopy configurations, referred to as **Block 3**. Said **Block 3** is shown in detail in **figure 12** and must be interposed between **Block 0** and **Block 1b** of the microscope as shown in **figures 3B and 4B.**

**Block 3** comprises a beam splitter **30**, which receives the fundamental reflected light L transmitted by the dichroïc mirror **21** in **Block 1b.** This fundamental light L is oriented by beam splitter **30** in the perpendicular direction and is focused onto a detector **31** with a conjugating lens **32**.

A microscope according to the invention can advantageously be constructed and tuned in several different embodiments each constructed from the assembly of **Blocks 0, 1, 2 and 3** as described above and adapted to different experimentations and providing different imaging performances.

The first simplest configuration of a microscope according to the present invention is one of a low-resolution SPR-enhanced nonlinear microscope represented schematically in **figure 2**, comprising only a first module consisting of **Block 0a,** and a second module consisting of **Block 1a.**

A second, and preferred, version of a microscope according to the invention corresponds to the one of **figure 3A**, representing a high-resolution SPR-enhanced nonlinear microscope. Such a microscope may be used to obtain the nonlinear susceptibility tensor $\chi_{ijk}^{(2)}$ of test samples as well as sensitive and sharp images of these samples.

That embodiment comprises either one of **Block 0a** or **Block 0b** for the conditioning of the excitation light beam and **Block 1b for** the generation of SPR at the metal layer **5**- observation medium **6** interface and the collection of the back reflected nonlinear response comprising second harmonic beams from the observed sample placed onto said metal layer **5**.

To improve contrast and sensitivity of the images obtained with the microscope of **figure 3A**, the high numerical aperture objective **7** may installed on a piezoelectric scanning system configured to allow vertical movement of the objective along the axial direction Z of the objective lens **7**. Thus, one can control exactly the position of the objective lens with respect to coverslip **4** bearing the sample observed on its metal layer coated back face. One can also defocalize the objective **7** slightly with respect to the test samples in order to improve image resolution through the collection of only the SPR-enhanced SHG light beams without fundamental light beams.

Moreover, the coverslip **4** may also be installed on a two-dimensional precision position system such as a two dimensional piezoelectric PZT scanning system, to allow scanning of the sample and gathering of the SHG light beam responses at each point in an XY horizontal plane normal to the vertical axis Z of the objective lens. Such embodiment of the high-resolution microscope of the invention can therefore allow a three dimensional XYZ scanning of samples.

The high-resolution microscope of **figure 3A** can further be perfected by the addition, between **Block 0a** or **Block 0b** and **Block 1b** of the optional **Block 3**, as shown in **figure 3B**. In that configuration, collection of both the back reflected nonlinear and linear responses of an observed sample **S** is allowed.

The microscope of **figures 3A** and **3B** can further be completed as shown in **figures 4A** and **4B** by the addition of the optional module **Block 2**, shown in detail in figure 11. Such addition of Block 2 allows collection of the transmitted evanescent harmonic light from a sample of observation S. This configuration offers the advantage (with respect to those of **figures 3A** and 3B) of collecting the evanescent field, and comparing the sample image through this field with that obtained from the reflected back light.

**Figure 5** represented another variant of the microscope of **figure 3A**, into which **Block 0c** is added to **Block 0a** or **Block 0b** to generate a second excitation light beam with a distinct frequency and realize sum or difference frequency generation experiments;

Finally, a last original configuration of a high-resolution SPR-enhanced nonlinear microscope according to the invention is represented in **figure 13**, which shows an interferometric configuration of the SPR-enhanced nonlinear microscope.

In that embodiment, a pulsed laser source **9** with a frequency $\omega_1$, is separated in two beams **L, L"** of frequency $\omega_1$ by a beam splitter **34**. The first beam **L** crosses a beam expander made of an expanding lens **10,** a spatial filter **11** and a collimating lens **12**. The expanded beam L is reflected and redirected by a mirror **35** through an annular diaphragm **14** towards a polarizing system **13**.

After the polarizing system **13**, the first beam **L** crosses a second beam splitter **36** and is then focused by a high numerical aperture objective lens **7** through an immersion oil **8** and a coverslip **4** coated on its back face with a metal layer **5** where SPR enhanced harmonic generation occurs. A sample **S** is placed onto said metal layer to be imaged according the method of the invention. The fundamental and the nonlinear back reflected lights **L, 2L** of respective frequencies $\omega_1$ and $2\omega_1$ form the observation beam, which cross back the objective lens **7** and are redirected by the beam splitter 36 towards a polarizer **18**.

The second beam **L"** is reflected by the first beam splitter **34** and enters a frequency doubling crystal **37** to produce, at the output of crystal **37** both fundamental and second harmonic light **L", 2L"**. Both lights **L", 2L"** then cross a third polarizing system **38** and enter a beam expander comprising an expanding lens **39**, a spatial filter **40** and a collimating lens **41** like for the first branch of fundamental light **L**.

The two second beams **L", 2L"** interfere with the first two beams **L, 2L** on a third beam splitter **42**.

The interference of the two fundamental beams **L, L"** is obtained by eliminating the nonlinear second harmonics **2L, 2L"** by a filtering system **43** and collected on a detector **44**. In the same time, the interference of the two harmonic beams **2L, 2L"** is obtained by eliminating the fundamental beams **L, L"** by a filtering system **45** and collected on a detector **46**. Both detectors **44,** 46 can be indistinctly a photodiode, a photomultiplier tube, a photo counting detector or a CCD camera.

The advantages of such an interferometric SPR-enhanced nonlinear microscope are to provide access to the complex value of the nonlinear susceptibility tensor $\chi_{ijk}^{(2)}$ instead of the modulus of this tensor in the former configurations.

The performances of the different embodiments of these nonlinear microscopes according to the present invention rely mainly on the fine tuning of the polarising means **13** in **Block 0** versus polarising means **18** in **Block 1** for the reflection mode represented in **figures 2, 3A, 3B and 5,** and polarising set-up **13** in **Block 0** versus polarising set-up **18** and **27** in **Block 1b and Block 2** for the transmission mode represented in **Figures 4A, 4B.**

The same applies for polarizing systems **13, 38** for the first and second light beams **L, L"** versus polarizing **18** for the observation beam comprising fundamental and second harmonic light **L, 2L** reflected from the sample S in the embodiment of figure **13**.

Fixing the polarization of excitation light **L** at a specific state and choosing one specific polarization state by means of polarizing systems **18**, **27** can be used to access different components of second-order nonlinear susceptibilities of the sample S.

Choosing the polarization state of the excitation light and recording the harmonic generation response in the observation beam can also be used to get information on the observed samples such as orientation of molecules.

Combining the fundamental and HG light detection together amplified by SPR effect in the close vicinity of a sample as proposed in the embodiments of **figures 3B** and **13** also allows imaging of the sample surface by both linear and nonlinear method, what helps obtaining more information on said sample and at least its linear and nonlinear properties, as well as surface molecular orientation.

The present invention is not limited to a particular wavelength of excitation light, specific detection methods or means, even not a specific objective.

The present invention only proposes a nonlinear imaging method as well as several imaging systems embodiments to implement and carry out said method, which use the SPR to enhance the nonlinear response of samples and together with some unique advantages over the prior art like for example, a variable Ez/Ex ratio and capability of detecting the different components of nonlinear susceptibility tensors.

**Claims**

1. A nonlinear microscopy method for imaging a sample (**S**) by means of harmonic generation, said method comprising the steps of :

   - generating at least one pulsed coherent excitation light beam (**L, L'**) having a determined frequency,
   - polarizing said excitation light beam to give the electromagnetic field E vector of said excitation light beam a preferred direction,
   - guiding said excitation light beam with optical guiding means towards a sample supporting plate (**4**),
   - coupling said excitation light beam (**L**) onto a sample (**S**) positioned onto said sample supporting plate (**4**),
   - collecting at least one observation beam comprising said fundamental and harmonic light beams (**L, 2L**),
   - separating the harmonic light beams (**2L**) from the fundamental light beams (**L**) in said observation beam, and
   - controlling the polarization of the said excitation beam versus the said observation beam that has interacted with the sample to extract orientation of molecules of the said sample (**S**).
   - detecting said harmonic light beams with detection means to generate a corresponding electric signal allowing building of an image of said sample with appropriate imaging means,

   **characterized in that** the electromagnetic field **E** of said excitation light beam (**L**) is amplified by surface plasmon resonance (**SPR**) at the interface between said sample (**S**) and said metal layer (**5**) and said excitation light beam to amplify the intensity of the harmonic light beams (**2L**) in the observation beam.

2. A nonlinear microscopy method according to claim 1, **characterized in that** said sample supporting plate (**4**) comprises a transparent optical plate being coated onto one surface with a metallic layer (**5**) having a thickness of a few tens of nanometers and **in that** said excitation light beam is projected onto said sample and said metallic layer through optical coupling means comprising an objective (**7**) having a high numerical aperture and an immersion oil (**8**) having the same reflective index as the optical plate to induce surface plasmon resonance at the interface between said sample and said metallic layer.

3. A nonlinear microscopy method according to claim 2, **characterized in that** the thickness of said metallic layer (5) lies in the range of 30 to 70 nanometers and **in that** the numerical aperture of the objective (7) of the optical coupling means is higher than 1.05.

4. A nonlinear microscopy method according to one of claims 1 to 3 **characterized in that** it comprises a two-dimensional scanning step of the sample by moving said sample supporting plate into a horizontal plane to perform a point-by-point scanning of the sample with said excitation light beam, or by moving the incident fundamental optical beam to scan the sample S.

5. A nonlinear microscopy method according to one of claims 1 to 4, **characterized in that** said polarizing step is executed through polarising means (**13**) positioned in the optical path of said excitation light beam.

6. A nonlinear microscopy method according to one of claims 2 to 5, **characterized in that** the observation beam is collected by said objective (**7**) of said optical coupling means and projected onto reflecting means (**21, 36**), said reflecting means guiding said observation beam towards said detection means (**20, 46**).

7. A nonlinear microscopy method according to one of claims 1 to 6, **characterized in that** said pulsed coherent light beam (**L**) is generated by either a nanosecond, a picosecond or a femtosecond laser source (**9**).

8. A nonlinear microscopy method according to one of claims 1 to 7, **characterized in that** two excitation light beams (**L, L'**) having a different frequency ($\omega_1$, $\omega_2$) are generated, polarized and projected onto said sample (**S**) positioned onto said sample supporting plate (**4**) to realize sum or difference frequency generation.

9. A nonlinear microscopy method according to one of claims 1 to 7, **characterized in that** the nonlinear transmitted light is collected and detected to compare with the nonlinear back reflected light in the observation beam.

10. A nonlinear microscopy method according to one of claims 1 to 7, **characterized in that** the excitation light beam (**L**) is divided is two beams (**L, L"**) of same frequency, which are respectively polarized and directed towards the sample and a frequency doubling element, the back reflected linear and nonlinear light beams (**L, 2L**) from the sample respectively interfering with the linear and nonlinear light beams (**L", 2L"**) from the output of the frequency doubling element (**37**), the resulting interfering light beams (**IL, 2IL**) being collected and detected independently.

11. A nonlinear microscope comprising:

 - a pulsed coherent light emitting device (**9**) giving off an excitation light beam (**L**) having a predetermined frequency ($\omega_1$), and
 - a sample supporting plate (**4**),
 - optical guiding means (**10, 11, 12, 14, 35**) for profiling, directing and projecting said light beam onto a sample positioned onto said sample supporting plate (**4**) to obtain an observation beam,
 - polarising means (**13**) placed in the optical path of said light beam for giving said excitation light beam a predetermined polarisation before said excitation light beam impinges said sample onto said supporting plate,
 - detection means (**20**) for detecting the harmonic light beams (**2L**) in said observation light beam and generating a corresponding electric signal to build an image of said sample therefrom,

 **characterized in that** said sample supporting plate (**4**) comprises a transparent optical plate being coated onto one surface with a metallic layer (**5**) and **in that** it further comprises optical coupling means (**2, 3, 7, 8**) for projecting said excitation light beam onto said sample and said metallic layer of said optical plate and inducing surface plasmon resonance (**SPR**) at the interface between said sample and metal layer.

12. A nonlinear microscope according to claim 11, **characterized in that** said optical coupling means comprise an optical objective (**7**) having a large numerical aperture and an immersion oil (**8**) bonded between said objective and said transparent optical plate of said sample supporting plate.

13. A nonlinear microscope according to claim 11 or 12, **characterized in that** said optical coupling means comprises an optical objective (**7**) having a numerical aperture higher than 1.05, and an immersion oil (**8**) bonded between said objective and said transparent optical plate of said sample supporting plate, said immersion oil having the same refractive index as said transparent optical plate.

14. A nonlinear microscope according to one of claims 11 to 13, **characterized in that** it comprises polarising means (**13**) adapted to select a determined polarization of the harmonic light beams (**2L**) before detection.

15. A nonlinear microscope according to claim 11 to 14, **characterized in that** said sample supporting plate (**4**) is a coverstrip having a thickness of about 30 to 70 nanometers.

16. A nonlinear microscope according to claim 11 to 15, **characterized in that** said pulsed coherent light emitting device (**9**) comprises either a nanosecond, a picosecond or a femtosecond laser source.

17. A nonlinear microscope according to claim 11 to 16, **characterized in that** said metallic layer (**5**) coated onto a surface of said transparent optical plate has a thickness of a few tens of nanometers, and preferably a thickness lying in the range of 30 to 70 nanometers.

18. A nonlinear microscope according to claim 11 to 17, **characterized in that** said detection means (**20**) comprises a photomultiplier tube, a CCD camera or an avalanche photodiode.

19. A nonlinear microscope according to claim 11 to 18, **characterized in that** said objective (**7**) of said coupling means cooperates with precision displacement means for moving said objective vertically along of vertical axis perpendicular to said sample supporting plate.

20. A nonlinear microscope according to one of claims 11 to 19, **characterized in that** said sample supporting plate (**4**) is mounted on or cooperates with a two-dimensional positioning means for moving said sample supporting plate into a horizontal plane and performing a two-dimensional point-by-point scanning of a sample positioned onto said sample supporting plate.

21. A nonlinear microscope according to one of claims 11 to 20, **characterized in that** it comprises a second light emitting device (**15**) generating a second excitation light beam (**L'**) having a second frequency ($\omega_2$) different from the frequency of the first excitation light beam (**L**).

22. A nonlinear microscope according to one of claims 11 to 21, **characterized in that** it comprises means (**22, 23, 24,**

**25, 26, 27, 28, 29**) for collecting and detecting the transmitted nonlinear light beam (**2Lt**) from a sample (**S**) comprising at least a second high numerical aperture objective (**22**), an optical frequency selective element (**26**), a polarizing system (**27**) and second detection means (**29**).

23. A nonlinear microscope according to one of claims 11 to 20, **characterized in that** it comprises:

- a beam splitter (**34**) to divide said excitation light beam (**L**) in an excitation beam (**L**) and an interfering beam (**L"**) of same frequency, and
- a frequency doubling element (**37**) to generate harmonic light (**2L"**) from the interfering beam (**L"**), and
- polarising means (**38**) to give said interfering beam and its harmonic light (**2L"**) a selected polarisation, and
- means (**42**) for generating interference between said interfering beam (L") and its harmonic light (**2L"**) and the linear and nonlinear lights (**L, 2L**) of the observation beam back reflected from a sample (**S**),
- means (**43, 44, 45, 46**) for selecting and detecting independently light beams (**IL, 2IL**) resulting from the interference of said interfering beam (**L"**) with linear light (**L**) of the observation beam and of harmonic interfering light (**2L"**) with nonlinear light (**2L**) of the observation beam.

FIG.1A

FIG.1B

FIG.2

FIG.3A

FIG.3B

Block 0a
or
Block 0b

~L

Block 1b

Block 2

FIG.4A

Block 0a
or
Block 0b

~L

Block 3

~L

Block 1b

Block 2

FIG.4B

Block 0c

Block 0a
or
Block 0b

~L, L'

Block 1b

FIG.5

Block 0a

9

L, $\omega 1$

10

11

12

13

L, $\omega 1$

FIG.6

Block Ob

9

L, ω1

10

11

12

13

14

L, ω1

FIG.7

Block Oc

16

15

L', ω2

FIG.8

L

Block 1a

19

18

17

L, 2L

2

4

20

θp

S

5

FIG.9

Block 1b

19

20

18    17

L, 2L

21

Z

Y

X

7

8

4

5

6

S

## FIG.10

Block 2

4

6    S

23

24

22

Z

Y

X

Lt, 2Lt

Lt, 2Lt

23

28    27    26

25

## FIG.11

FIG.12

FIG.13

European Patent
Office

**EUROPEAN SEARCH REPORT**

Application Number

EP 08 30 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/064991 A (SALAFSKY JOSHUA S [US]) 7 August 2003 (2003-08-07) * page 19, line 15 - line 20 * * page 35, line 8 - line 19 * * page 36, line 5 - line 24 * * page 63, line 11 - page 66, line 5 * * figures 1,6 * | 1-23 | INV. G01N21/63<br><br>ADD. G01N21/55 |
| A,D | WO 01/92858 A (UNIV NOTTINGHAM [GB]; SOMEKH MICHAEL GEOFFREY [GB]; SEE CHUNG WAH [GB]) 6 December 2001 (2001-12-06) * page 10 - page 13 * | 1-23 | |
| A | WATANABE K ET AL: "OPTIMIZED MEASUREMENT PROBE OF THE LOCALIZED SURFACE PLASMON MICROSCOPE BY USING RADIALLY POLARIZED ILLUMINATION" APPLIED OPTICS, OSA, OPTICAL SOCIETY OF AMERICA, WASHINGTON, DC, vol. 46, no. 22, 1 August 2007 (2007-08-01), pages 4985-4990, XP001507011 ISSN: 0003-6935 | | |
| A | BERGUIGA L ET AL: "HIGH-RESOLUTION SURFACE-PLASMON IMAGING IN AIR AND IN WATER: V(Z) CURVE AND OPERATING CONDITIONS" OPTICS LETTERS, OSA, OPTICAL SOCIETY OF AMERICA, WASHINGTON, DC, US, vol. 32, no. 5, 1 March 2007 (2007-03-01), pages 509-511, XP001504715 ISSN: 0146-9592 | | |

TECHNICAL FIELDS SEARCHED (IPC)

G01N

-/--

The present search report has been drawn up for all claims

| Place of search | Date of completion of the search | Examiner |
|---|---|---|
| The Hague | 12 August 2008 | Verbandt, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 08 30 5052

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG L ET AL: "SURFACE SECOND HARMONIC GENERATION (SSHG) - A NEW SCHEME FOR IMMUNOASSAY" PROCEEDINGS OF THE SPIE, SPIE, BELLINGHAM, VA, vol. 2676, 1 April 1996 (1996-04-01), pages 290-296, XP009040512 ISSN: 0277-786X ----- | | |
| A | ZHANG ET AL: "Surface plasmon resonance characterization of thermally evaporated thin gold films" SURFACE SCIENCE, NORTH-HOLLAND PUBLISHING CO, AMSTERDAM, NL, vol. 601, no. 23, 22 November 2007 (2007-11-22), pages 5445-5458, XP022356903 ISSN: 0039-6028 ----- | | |
| A | ELEZGARAY J ET AL: "Topography reconstruction from surface plasmon resonance data; Topography reconstruction from surface plasmon resonance data" JOURNAL OF OPTICS. A, PURE AND APPLIED OPTICS, INSTITUTE OF PHYSICS PUBLISHING, BRISTOL, GB, vol. 7, no. 9, 1 September 2005 (2005-09-01), pages 472-478, XP020093166 ISSN: 1464-4258 ----- -/-- | | TECHNICAL FIELDS SEARCHED (IPC) |

The present search report has been drawn up for all claims

| Place of search | Date of completion of the search | Examiner |
|---|---|---|
| The Hague | 12 August 2008 | Verbandt, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 08 30 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEN-KAI ZHANG ET AL: "Quantitative measurement and interpretation of optical second harmonic generation from molecular interfaces" PHYSICAL CHEMISTRY CHEMICAL PHYSICS R. SOC. CHEM UK, vol. 8, no. 35, 21 September 2006 (2006-09-21), pages 4041-4052, XP002491807 ISSN: 1463-9076 ----- | | |
| A | YEW ELIJAH Y S ET AL: "Effects of axial field components on second harmonic generation microscopy" OPT. EXPRESS; OPTICS EXPRESS FEBRUARY 2006, vol. 14, no. 3, February 2006 (2006-02), pages 1167-1174, XP002491808 ----- | | |

TECHNICAL FIELDS
SEARCHED (IPC)

The present search report has been drawn up for all claims

| Place of search | Date of completion of the search | Examiner |
|---|---|---|
| The Hague | 12 August 2008 | Verbandt, Yves |

EPO FORM 1503 03.82 (P04C01)

## EP 2 101 168 A1

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2008

| Patent document cited in search report | | Publication date | Patent family member(s) | | Publication date |
|---|---|---|---|---|---|
| WO 03064991 | A | 07-08-2003 | NONE | | |
| WO 0192858 | A | 06-12-2001 | AT | 390627 T | 15-04-2008 |
| | | | AU | 7420601 A | 11-12-2001 |
| | | | EP | 1287337 A1 | 05-03-2003 |
| | | | US | 2004100636 A1 | 27-05-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0192858 A1

**Non-patent literature cited in the description**

- **Franken et al.** *PRL,* 1961, vol. 7 (4), 118-119

- **C. Qian ; T.S. Velinov ; M.C. Pitter ; M.G. Somekh.** Surface plasmon-assisted widefield nonlinear imaging of gold structures. *Journal of microscopy,* 2008, vol. 229, 6-11